(19) **Europäisches Patentamt**

**European Patent Office**

**Office européen des brevets**

(11) **EP 1 248 208 A2**

(12) **EUROPEAN PATENT APPLICATION**

(43) Date of publication:
09.10.2002 Bulletin 2002/41

(51) Int Cl.$^7$: **G06F 17/30**

(21) Application number: **02006903.5**

(22) Date of filing: **26.03.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **05.04.2001 JP 2001107629**<br>**09.01.2002 JP 2002002669**<br><br>(71) Applicant: **MATSUSHITA ELECTRIC INDUSTRIAL CO., LTD.**<br>**Kadoma-shi, Osaka (JP)** | (72) Inventors:<br>• **Inaba, Mitsuaki**<br>**Tokyo (JP)**<br>• **Kanno, Yuji**<br>**Yokohama-shi, Kanagawa (JP)**<br><br>(74) Representative: **Grünecker, Kinkeldey, Stockmair & Schwanhäusser Anwaltssozietät**<br>**Maximilianstrasse 58**<br>**80538 München (DE)** |

(54) **Distributed document retrieval method and device, and distributed document retrieval program and recording medium recording the program**

(57)    A distributed document retrieval method for performing document retrieval by plural retrieval servers that each perform document retrieval for a database storing plural documents, and an integrating retrieval server that is connected to the plural retrieval servers over communication and issues retrieval orders to the retrieval servers, wherein each retrieval server delivers statistical information created based on intermediate results obtained by retrieval operation to the integrating retrieval server, the integrating retrieval server compiles the statistical information to create global statistical information and delivers it to each retrieval server, and each retrieval server calculates scores based on the global statistical information and sends retrieval results matching retrieval conditions back to the integrating retrieval server. By the above described operation, efficient and correct ranking among retrieval documents is achieved with improved document retrieval quality.

FIG. 1

## Description

BACKGROUND OF THE INVENTION

Field of the Invention

The present invention relates to a distributed document retrieval method and device, and more particularly to a distributed document retrieval method and device that enable document retrieval to be performed efficiently and at high speed.

Description of the Prior Art

Conventional document retrieval devices are described in, e.g., Japanese Patent Disclosure No. H9-319757 or Japanese Patent Disclosure No. H10-21250. A document retrieval device described in Japanese Patent Disclosure No. H9-319757 performs score calculation and ranking closed in individual retrieval servers, each of which returns the top-ranked M records.

A document retrieval device described in Japanese Patent Disclosure No. H10-21250 provides a document retrieval method for using plural usable databases at one or more servers by using one or more search engines.

However, in the above described prior arts, the document retrieval device described in Japanese Patent Disclosure No. H9-319757 has a drawback in that ranking results are incorrect. The document retrieval device described in Japanese Patent Disclosure No. H10-21250 has a drawback in that score calculation and ranking results are correct but inefficiently and unreally the retrieval servers return information of all hit records.

SUMMARY OF THE INVENTION

According to a distributed document retrieval method of the present invention, a document is retrieved by plural retrieval servers and an integrating retrieval server integrating the retrieval servers in such a way that each retrieval server delivers statistical information created based on intermediate results obtained by retrieval operation to the integrating retrieval server; the integrating retrieval server compiles the statistical information to create global statistical information and delivers it to each retrieval server; and each retrieval server calculates correct scores based on the global statistical information and sends retrieval results matching retrieval conditions back to the integrating retrieval server. By this method, document retrieval can be per formed more correctly and efficiently.

As numerous embodiments of the present invention having the above configuration, the present invention is a distributed document retrieval method for performing document retrieval by plural retrieval servers that each perform document retrieval for a database storing plural documents, and an integrating retrieval server that is connected to the plural retrieval servers over communication and issues retrieval orders to the retrieval servers, wherein each retrieval server delivers statistical information created based on intermediate results obtained by retrieval operation to the integrating retrieval server; the integrating retrieval server compiles the statistical information to create global statistical information and delivers it to each retrieval server; and each retrieval server calculates scores based on the global statistical information and sends retrieval results matching retrieval conditions back to the integrating retrieval server. Thereby, document retrieval can be performed more correctly and efficiently.

The present invention also provides a distributed document retrieval device comprising plural retrieval servers that each perform document retrieval for a database storing plural documents, and an integrating retrieval server that is connected to the plural retrieval servers over communication and issues retrieval orders to the retrieval servers, wherein the retrieval servers each include retrieving means for performing retrieval operation on the databases, means for holding intermediate results obtained as a result of the retrieval operation, statistical information outputting means for creating and outputting statistical information from the intermediate results, and score calculating means for giving scores to each of retrieved documents; the integrating retrieval server includes statistical information compiling means for compiling statistical information delivered from plural retrieval servers; and the integrating retrieval server creates global statistical information and delivers it to the retrieval servers, and the retrieval servers each calculate correct scores, based on the global statistical information, and send retrieval results matching retrieval conditions back to the integrating retrieval server. Thereby, document retrieval can be performed more correctly and efficiently.

In the above configuration, preferably, the integrating retrieval server includes means for creating an integrated version, based on statistical information compiled by the statistical information compiling means, integrated version updating means for updating the integrated version, and integrated version management means for managing the integrated version, and the retrieval servers includes version updating means for updating the versions of the databases and version management means for managing versions.

The present invention further provides a distributed document retrieval program for performing document retrieval by plural retrieval servers that each perform document retrieval for a database storing plural documents, and an integrating retrieval server that is connected to the plural retrieval servers over communication and issues retrieval orders to the retrieval servers, the distributed document retrieval program comprising the steps of: instructing each retrieval server to deliver statistical information created based on intermediate results obtained by retrieval operation to the integrating retrieval server; instructing the integrating retrieval server to compile the statistical information to create global statistical information and deliver it to each retrieval server; and instructing each retrieval server to calculate scores based on the global statistical information and send retrieval results matching retrieval conditions back to the integrating retrieval server, and a computer-readable recording medium recording the program. Thereby, document retrieval can be performed more correctly and efficiently.

As has been described above, the present invention can provide the effect that document retrieval can be performed more correctly and efficiently.

Therefore, an object of the present invention is to provide a document retrieval method that enables document retrieval to be performed with increased quality by efficiently and correctly ranking documents to be retrieved, a distributed document retrieval method and device employing the method.

The object and advantages of the present invention will be made more apparent by the following embodiments described with reference to the accompanying drawings.

BRIEF DESCRIPTION OF THE DRAWINGS

FIG. 1 is a block diagram showing a configuration of a distributed document retrieval device according to a first embodiment of the present invention;
FIG. 2 is a sequence diagram showing an operation procedure among a client, an integrating retrieval server, and retrieval servers during document retrieval processing in the foregoing embodiment;
FIG. 3 shows data configurations of retrieval requests in the foregoing embodiment;
FIG. 4 shows an example of data contents of intermediate results in the foregoing embodiment;
FIG. 5 shows the numbers of documents in which individual retrieval terms appear, compiled by statistical information outputting means in the foregoing embodiment appear;
FIG. 6 shows an integrated version of data registered in an integrated version management table in the foregoing embodiment;
FIG. 7 shows an example of time series transition of versions of databases for which processing such as retrieval request, retrieval execution, statistical information creation, and compilation in the foregoing embodiment is performed;
FIG. 8 is a sequence diagram showing an operation procedure among a client, an integrating retrieval server, and retrieval servers during document retrieval processing in a second embodiment of the present invention;
FIG. 9 shows data configurations of retrieval requests in the foregoing embodiment;
FIG. 10 is a flowchart of general processing by an integrating retrieval server for comprehensively explaining an operation procedure of distributed document retrieval processing in the foregoing embodiments of the present invention;
FIG. 11 is a flowchart of retrieval order processing by the integrating retrieval server;
FIG. 12 is a flowchart of compilation and update processing by the integrating retrieval server;
FIG. 13 is a flowchart of general processing by a retrieval server for comprehensively explaining an operation procedure of distributed document retrieval processing in the foregoing embodiments of the present invention;
FIG. 14 is a flowchart of retrieval and statistical processing by the retrieval server;
FIG. 15 is a flowchart of score calculation processing by the retrieval server; and
FIG. 16 is a flowchart of general processing by a client terminal for comprehensively explaining an operation procedure of distributed document retrieval processing in the foregoing embodiments of the present invention;

DESCRIPTION OF THE PREFERRED
EMBODIMENTS

(First embodiment)

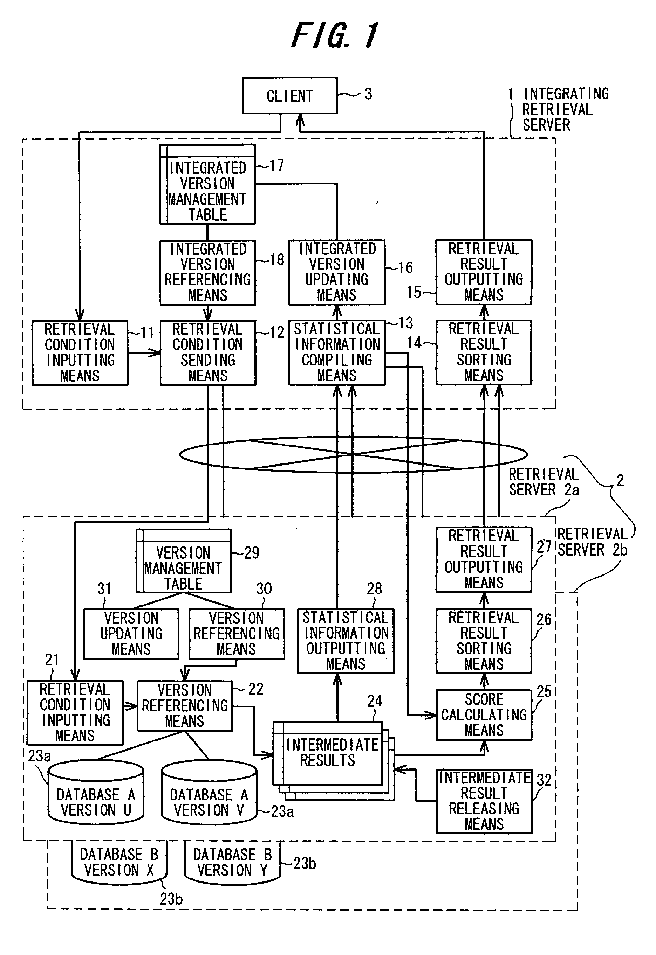

Hereinafter, embodiments of the present invention will be described with reference to the accompanying drawings. FIG. 1 is a block diagram showing a configuration of a distributed document retrieval device according to a first embodiment of the present invention. In FIG. 1, reference numeral 1 designates an integrating retrieval server and 2 designates retrieval servers, plural retrieval servers 2a and 2b in this embodiment. 3 designates a client that outputs a document retrieval request and receives the result of the document retrieval. The integrating retrieval server 1 and the retrieval servers 2 are connected with each other over communication to send and receive document retrieval data. The retrieval servers 2a and 2b individually have a database for storing large quantities of document and perform document retrieval for documents stored in the respective databases. The integrating retrieval server 1 compiles document retrieval results delivered from plural retrieval servers 2 and presents an overall document retrieval result to the client (user).

In the integrating retrieval server 1 of FIG. 1, reference numeral 11 designates retrieval condition inputting means for receiving a command from the client 3 and inputting retrieval conditions; 12, retrieval condition sending means for sending inputted retrieval conditions to the retrieval servers 2; 13, statistical information compiling means for receiving and compiling statistical information delivered from the retrieval servers 2;

14, retrieval result sorting means for sorting retrieval results delivered from the retrieval servers 2 according to a predetermined rule; 15, retrieval result outputting means for delivering retrieval results to the client 3; 16, integrated version updating means for updating an integrated version of retrieval results from compilation results obtained in the statistical information compiling means 13; 17, an integrated version management table for managing integrated versions; and 18, integrated version referencing means for referencing integrated versions and outputting the result to the retrieval condition sending means 12. The integrated version management table 17 is a data storage area of memory in the integrating retrieval server 1.

In the retrieval servers 2 of FIG. 1 (2a is representatively shown but 2b also has the same configuration), reference numeral 21 designates retrieval condition inputting means for receiving retrieval conditions from the integrating retrieval server 1 and inputting retrieval conditions of its own; 22, retrieving means for performing document retrieval operation according to inputted retrieval conditions; 23, a database to store large quantities of document; 24, intermediate results obtained in the process of document retrieval by the retrieving means 22; 25, score calculating means for calculating scores for documents retrieved based on the intermediate results 24; 26, retrieval result sorting means for sorting retrieval results based on the results of score calculation by the score calculating means 25; 27, retrieval result outputting means for delivering retrieval results to the integrating retrieval server 1; 28, statistical information outputting means for creating statistical information from the intermediate results 24 and delivering the statistical information to the integrating retrieval server 1; 29, a version management table for managing versions of retrieval results in the retrieval server 2a; 30, version referencing means for referencing versions and outputting the result to the retrieving means 22; 31, version updating means for updating the contents of the version management table 29; and 32, intermediate result releasing means, when intermediate results are changed, for releasing intermediate results before the change. The intermediate results 24 and the version management table 29 are respectively data storage areas of memory in the retrieval server 2a.

Hereinafter, a description will be made of document retrieval operation of a distributed document retrieval device having a configuration according to an embodiment of the present invention.

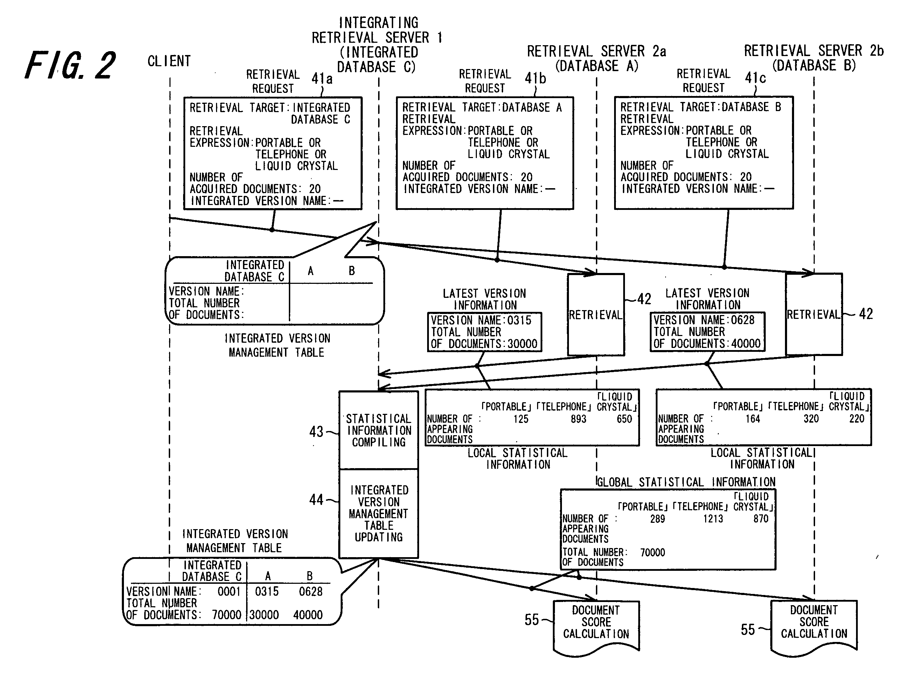

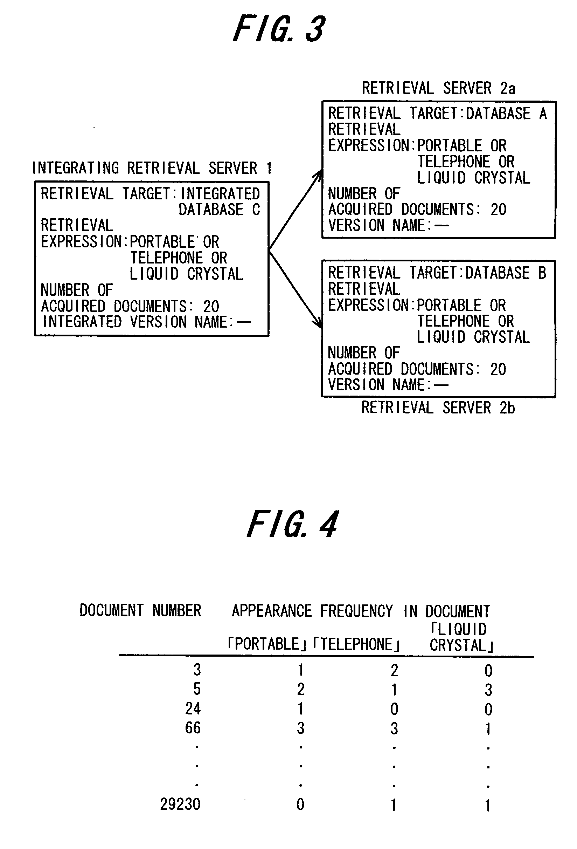

FIG. 2 is a sequence diagram showing an operation procedure among the client 3, the integrating retrieval server 1, and the retrieval servers 2a and 2b during document retrieval processing. A retrieval request 41a is outputted from the client 3 to the integrating retrieval server 1. In this embodiment, the retrieval request is the first retrieval request to an integrated database C in a system of the distributed document retrieval device. The integrated database C, which virtually connects a database A 23a on the retrieval server 2a and a database B 23b on the retrieval server 2b, does not exist actually. FIG. 3 shows data configurations of retrieval requests 41a to 41c in the embodiment. As is apparent from the data configuration diagram, the contents of the retrieval request 41a are as follows :

> Retrieval target: Integrated database C
> Retrieval expression: Portable, telephone, or liquid crystal Number of documents to be acquired: 20
> Integrated version name: --.

Herein, "Retrieval target: Integrated database C" denotes that a user specifies the integrated database C as a retrieval target. "Retrieval expression: Portable, telephone, or liquid crystal" denotes a request to perform retrieval by the indicated retrieval expression. "Number of documents to be acquired: 20" denotes a request to acquire the first 20 documents ranked highest in terms of document scores. "Integrated version name" is not specified in the retrieval request 41a.

Upon receiving the retrieval request 41a, the integrating retrieval server 1 inputs retrieval conditions in the retrieval condition inputting means 11, and refers to integrated version data of the integrated version management table 17 by the integrated version referencing means 18, and then delivers further retrieval requests 41a and 41c to the retrieval servers 2a and 2b by the retrieval condition sending means 12. At this time, no integrated version data exists because no retrieval request has been made to the integrated database C in the integrating retrieval server 1. Therefore, data of retrieval requests 41b and 41c specifying no version name is sent to the retrieval servers 2a and 2b. Specifically, data of retrieval request 41b sent to the retrieval server 2a has the following contents, as seen from FIG. 3:

> Retrieval target: Database A
> Retrieval expression: Portable, telephone, or liquid crystal Number of documents to be acquired: 20
> Version name: --.

Data of retrieval request 41c delivered to the retrieval server 2b has the following contents, as seen from FIG. 3:

> Retrieval target: Database B
> Retrieval expression: Portable, telephone, or liquid crystal Number of documents to be acquired: 20
> Version name: --.

In the retrieval servers 2a and 2b, the above described retrieval conditions are inputted in the retrieval condition inputting means 21, and as retrieval operation 42, retrieval for the database A (for the retrieval server 2a) and the database B (for the retrieval server 2b) is performed by the retrieving means 22. The retrieval servers 2a and 2b perform the retrieval operation 42 in parallel. The retrieval server 2a refers to the version management table 29 by the version referencing means 30 during the retrieval operation 42 and recognizes that the latest version of the database A 23a has the version name of 0315 and the total number of documents is 30,000. Next, the retrieving means 22 performs retrieval for the database A 23a of the version, obtains document numbers hitting the retrieval conditions and the frequency of each retrieval term in documents, and stores them in an area for intermediate results 24.

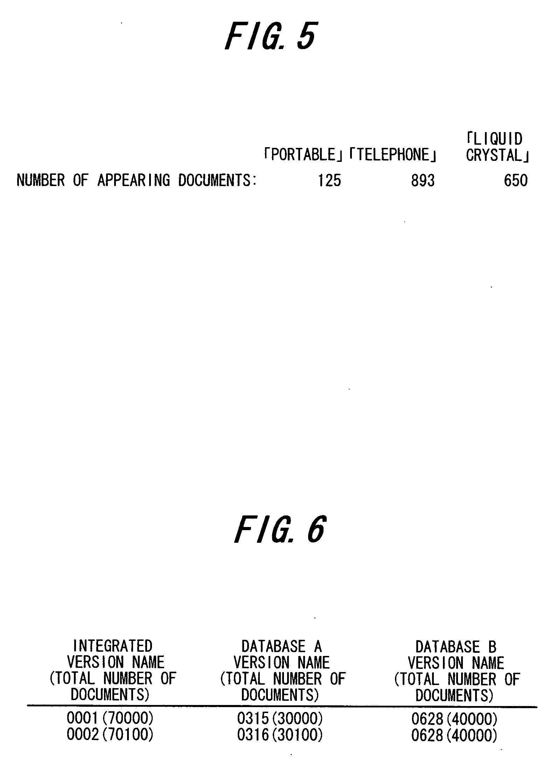

FIG. 4 shows an example of data contents of the intermediate results 24. The diagram shows that, as a result of retrieval under the above described retrieval condition in the retrieval server 2a, documents of document numbers 3, 5, 24, ..., 29230 were hit and retrieved. It is understood that, in a document of document number 3, the term "portable" exists in one location, the term "telephone" exists in two locations, and the term "liquid crystal" exists in no location. Similar contents are shown for document number of 5 and greater as well. Using the intermediate results, the statistical information outputting means 28 compiles the numbers of documents in which the individual retrieval terms appear, to create statistical information. FIG. 5 shows the numbers of documents in which the individual retrieval terms appear, compiled by the statistical information outputting means 28. As apparent from the diagram, of documents collected as the intermediate results, the number of documents in which the term "portable" appears is 125, the number of documents in which the term "telephone" appears is 893, and the number of documents in which the term "liquid crystal" appears is 650. The "number" of appearing documents denotes the number of documents in which a particular retrieval term appears (even once), and no matter how often it appears in the documents, the number of appearances thereof is counted as one.

The statistical information outputting means 28 returns the statistical information to the integrating retrieval server 1 along with information of the latest version having been used for the retrieval (version name 0315, the total number of documents 30,000). Thereafter, the retrieval server 2a waits until global statistical information obtained in the integrating retrieval server 1 arrives.

The above described series of operations of the retrieval server 2a are performed in parallel in the retrieval server 2b as well. As shown in FIG. 2, as a result of retrieval under the same retrieval condition as with the retrieval server 2a, the retrieval server 2b recognizes that the latest version of the database B (23b) has the version name of 0628 and the total number of documents is 40,000. From intermediate results created based on documents retrieved by the retrieval operation 42, the number of documents in which the term "portable" appears is 164, the number of documents in which the term "telephone" appears is 320, and the number of documents in which the term "liquid crystal" appears is 220.

Upon receiving the statistical information from the retrieval servers 2a and 2b, the integrating retrieval server 1 performs statistical information compilation operation 43. In this operation, the statistical information compiling means 13 adds (compiles) the numbers of documents in which individual retrieval terms appear, returned from the retrieval servers 2a and 2b, to calculate the numbers of documents in the integrated database C in which the individual retrieval terms appear. The integrating retrieval server 1 performs integrated version management table updating 44, based on the above described compilation result. In the integrated version management table updating 44, the integrated version updating means 16 registers an integrated version 0001 of the integrated database C in the integrated version management table 17. As described above, at the start of the retrieval, there existed no integrated version data of the integrated database C of the integrating retrieval server 1. Therefore, for the first time at this point, the integrated version 0001 of the integrated database C is registered in the integrated version management table 17.

By the registration processing, the following information is stored in the integrated version management table 17: aversion name 0315 of the database A 23a and a version name 0628 of the database B 23b, which constitute the integrated version 0001 of the integrated database C, and the total number of documents in each of the databases. FIG. 6 shows data of the integrated version 0001 registered in the integrated version management table 17 on an upper row, as described above (data of lower rows is created by subsequent processing). The integrating retrieval server 1 sends the total number of documents of the integrated version 0001 of the integrated database C and the numbers of documents in which individual retrieval terms appear, to the retrieval servers 2a and 2b. The total number of documents of the integrated version 0001 of the integrated database C and the numbers of documents in which individual retrieval terms appear can be said as global statistical information because they cover the number of documents sent from all the retrieval servers 2. By the way, the global statistical information obtained in the above described processing is detailed using FIG. 2; the total number of documents of the integrated version having been used for the retrieval is 70,000 (30,000 + 40,000 = 70,000), the number of documents in which "portable" appears is 289, the number of documents in which "telephone" appears is 1213, and the number of documents in which "liquid crystal" appears is 870.

Upon receiving the total number of documents of the integrated version 0001 of the integrated database C and the numbers of documents in which individual retrieval terms appear, the retrieval server 2a performs document score calculation 45. In the document score calculation 45, using the global statistical information sent from the integrating retrieval server 1, that is, the total number of documents of the integrated version 0001 of the integrated database C and the numbers of documents in which individual retrieval terms appear, the score calculating means 25 calculates document score S for each of documents of the intermediate results stored in the area for the intermediate results 24 by the following expression:

$$S = \acute{O}(tf*idf)$$

where:

tf: Number of appearances of a retrieval term in a document
idf: log (number of documents in which a retrieval term appears/total number of documents).

The expression for calculating document score S is a typical example and is not mandatory.

Based on the result, the retrieval result sorting means 26 sorts document numbers in ascending order by document score. The retrieval result outputting means 27 returns the 20 top-ranked document numbers and document scores to the integrating retrieval server 1.

The above described series of operations of the retrieval server 2a are performed in parallel in the retrieval server 2b as well; also from the retrieval server 2b, the retrieval result outputting means 27 returns the 20 top-ranked document numbers and document scores to the integrating retrieval server 1.

The integrating retrieval server 1 sorts a total of 40 document numbers returned from the retrieval servers 2a and 2b in ascending order by document score by the retrieval result sorting means 14. Next, the retrieval result outputting means 15 returns a retrieval result of the 20 top-ranked document scores and the version name 0001 of the integrated database C having been used for the retrieval to the client.

To obtain a retrieval result of the 21 or greater top-ranked document scores under the same retrieval condition or the substance of documents selected from a retrieval result, a retrieval request (or a substance acquisition request) specifying the integrated version 0001 is sent from the client to the integrating retrieval server 1. Thereby, the retrieval servers 2a and 2b perform retrieval (or substance acquisition) fixedly to the respective versions 0315 and 0628 of the corresponding databases A 23a and B 23b, respectively, whereby consistent results can be obtained.

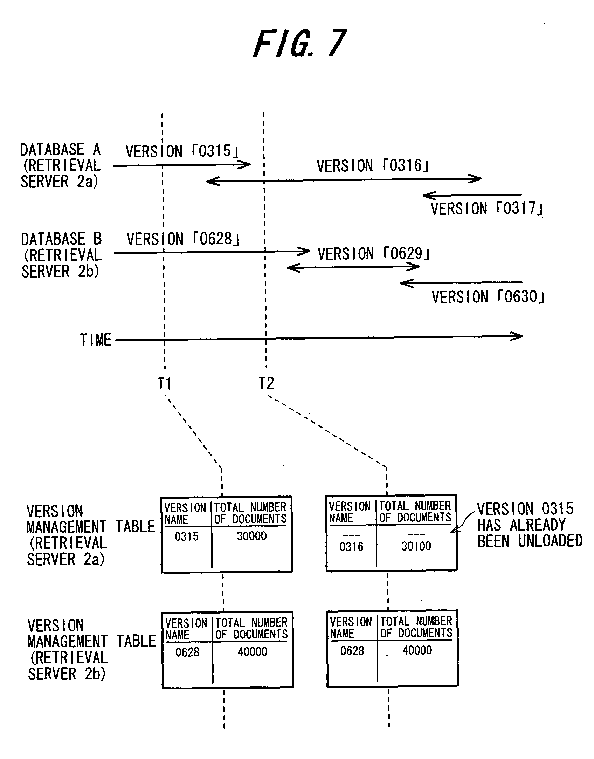

FIG. 7 shows an example of time series transition of versions of databases A 23a and B 23b for which processing such as retrieval request, retrieval execution, statistical information creation, and compilation is performed. The above described operation corresponds to operation in the case where, at time T1 in FIG. 7, the user performs retrieval for the integrated database C by a retrieval expression "portable or telephone or liquid crystal" to acquire the first 20 records ranked highest in terms of document scores. Therefore, at the time T1, the version name of the latest version of the database A 23a is 0315 and the version name of the latest version of the database B 23b is 0628, matching the above description.

(Second embodiment)

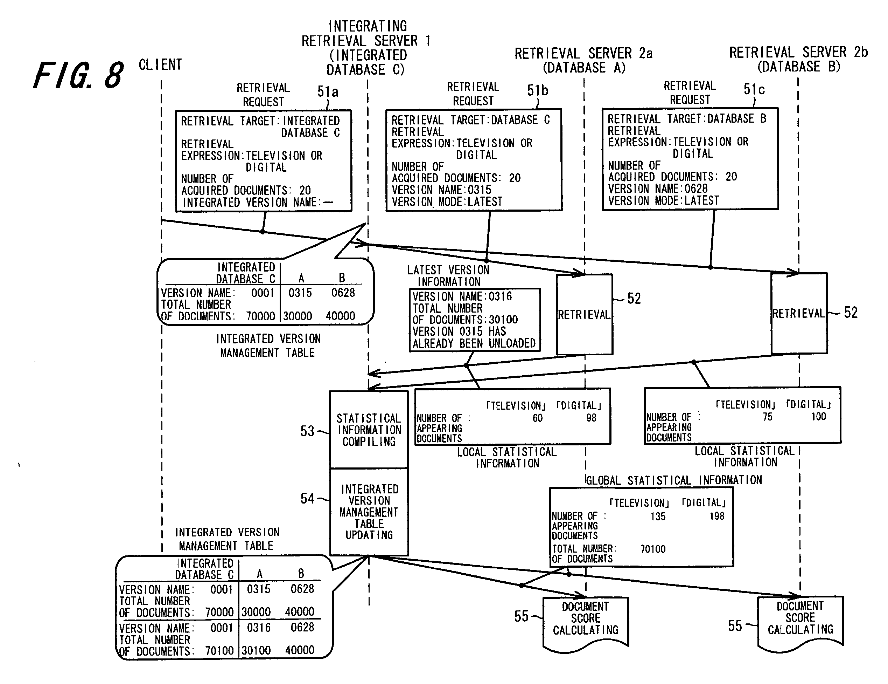

Next, a second embodiment of the present invention will be described. Suppose that, at time T2 in FIG. 7, the user performs retrieval for the integrated database C by a different retrieval expression "television or digital" to acquire the first 20 documents ranked highest in terms of document scores. FIG. 8 is a sequence diagram showing an operation procedure among a client 3, the integrating retrieval server 1, and the retrieval servers 2a and 2b during the above described document retrieval processing. A retrieval request 51a is outputted from the client 3 to the integrating retrieval server 1. The retrieval request 51a is a retrieval request to the integrated database C that specifies no integrated version name.

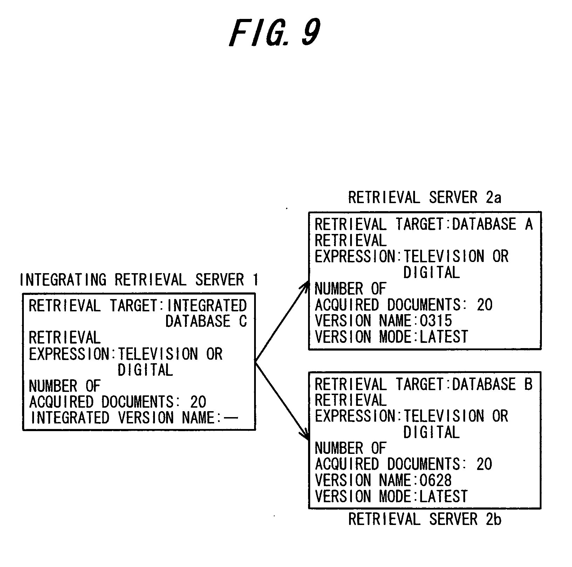

FIG. 9 shows data configurations of retrieval requests 51a to 51c in the present embodiment. As apparent from the data configuration diagram, the contents of the retrieval requests 51a are as follows:

Retrieval target: Integrated database C
Retrieval expression: Television or digital
Number of documents to be acquired: 20
Integrated version name: --.

Upon receiving the retrieval requests 51a, the integrating retrieval server 1 inputs retrieval conditions in the retrieval condition inputting means 11 and refers to the integrated version data of the integrated version management table 17 by the integrated version referencing means 18 to obtain the latest integrated version of the integrated database C. The latest integrated version at this time is "0001" (FIG. 8). Thereafter, the integrating retrieval server 1 delivers further retrieval requests 51b and 51c to the retrieval servers 2a and 2b by the retrieval condition sending means 12. At this time, as described above, since the integrated version is "0001", a retrieval request 51b specifying the version 0315 of the database A 23a is issued to the retrieval server 2a, while a retrieval request 51c specifying the version 0628 of the database B 23b is issued to the retrieval server 2b. The requests are sent with "latest" specified as version mode. The version mode "latest" denotes that retrieval is performed with a newer version than a sent version name if any and the true latest version of information is sent together, and if the sent version name is the latest version, the version need not be returned.

To be more specific, data of the retrieval request 51b delivered to the retrieval server 2a is as follows, as apparent from FIG. 9:

> Retrieval target: Database A
> Retrieval expression: Television or digital
> Number of documents to be acquired: 20
> Version name: 0315
> Version mode: Latest.

Data of the retrieval request 51c delivered to the retrieval server 2b is as follows, as apparent from FIG. 9:

> Retrieval target: Database B
> Retrieval expression: Television or digital
> Number of documents to be acquired: 20
> Version name: 0628
> Version mode: Latest.

In the retrieval servers 2a and 2b, the above described retrieval conditions are inputted in the retrieval condition inputting means 21, and as retrieval operation 52, retrieval for the database A (for the retrieval server 2a) and the database B (for the retrieval server 2b) is performed by the retrieving means 22. The retrieval servers 2a and 2b perform the retrieval operation 52 in parallel. The retrieval server 2a refers to the version management table 29 by the version referencing means 30 during the retrieval operation 52 and recognizes that the version name of the latest version of the database A 23a is not 0315 but 0316 and the total number of documents is 30,100 (FIG. 7). Next, the retrieving means 22 performs retrieval for the database A 23a of the latest version 0316, obtains document numbers hitting the retrieval conditions and the frequency of each retrieval term in documents, and stores them in an area for intermediate results 24.

The intermediate results 24 in the present invention can be represented in the same form as the intermediate results 24 in the first embodiment, shown in FIG. 4. Therefore, a pictorial representation of them is omitted. Also, the numbers of documents in which individual retrieval terms appear, compiled and obtained by the statistical information outputting means 28, as shown in FIG. 5, can be represented in the same form as this. Therefore, a pictorial representation of it is omitted.

The statistical information outputting means 28 returns the statistical information to the integrating retrieval server 1 along with information of the latest version having been used for the retrieval (version name 0316, the total number of documents 30,100). Thereafter, the retrieval server 2a waits until global statistical information obtained in the integrating retrieval server 1 arrives.

The above described series of operations of the retrieval server 2a are performed in parallel in the retrieval server 2b as well. As shown in FIGS. 7 and 8, as a result of retrieval under the retrieval condition of the retrieval request 51c like the retrieval server 2a, the retrieval server 2b recognizes that the version name of the latest version of the database B (23b) remains 0628 and the total number of documents also remains 40,000. Accordingly, the retrieving means 22 performs retrieval for the database B 23b of the latest version 0628 and stores intermediate results 24 created based on documents retrieved by the retrieval operation 52 in an intermediate result area. The retrieval server 2b obtains the numbers of documents in which the retrieval terms appear, and returns it to the integrating retrieval server 1 by the statistical information outputting means 28. However, information of the version 0628 having been used for the retrieval is not returned.

Upon receiving the statistical information from the retrieval servers 2a and 2b, the integrating retrieval server 1 performs statistical information collection 53. In this operation, the statistical information compiling means 13 adds (compiles) the numbers of documents in which individual retrieval terms appear, returned from the retrieval servers 2a and 2b, to calculate the numbers of documents in the integrated database C in which the individual retrieval terms appear. The integrating retrieval server 1 performs integrated version management table updating 54, based on the above described compilation result. In the integrated version management table updating 54, the integrated version updating means 16 checks whether the number of integrated versions registered in the integrated version management table 17 exceeds a predetermined value, and if so, deletes older versions earlier. The integrated version updating means 16 registers an integrated version 0002 of the integrated database C in the integrated version management table 17. Thereby, the integrated version management table 17 is stored with the respective version names 0316 and 0628 of the database A 23a and database B 23b that constitute the integrated version 0002 of the integrated database C, and the respective total numbers of documents.

In lower rows of FIG. 6, data of the integrated version 0002 registered in the integrated version management table 17 as described above is shown. The integrating retrieval server 1 sends the total number of documents of the integrated version 0002 of the integrated database C, and the numbers of documents in which individual retrieval terms appear, to the retrieval servers 2a and 2b. The total number of documents of the integrated version 0002 of the integrated database C and the numbers of documents in which individual retrieval terms appear can be said as global statistical information because they cover the number of documents sent from all the retrieval servers 2. By the way, the global statistical information obtained in the above described processing is detailed using FIG. 2; the total number of documents of the integrated version having been used for the retrieval is 70,100 (30,100 + 40,000 = 70,100) (FIG. 8).

Upon receiving the total number of documents of the integrated version 0002 of the integrated database C and the numbers of documents in which individual retrieval terms appear, the retrieval server 2a performs document score calculation 55. In the document score calculation 55, using the global statistical information sent from the integrating retrieval server 1, that is, the total number of documents of the integrated version 0002 of the integrated database C and the numbers of documents in which individual retrieval terms appear, the score calculating means 25 calculates document score S for each of documents of the intermediate results stored in the area for the intermediate results 24 by the following expression:

$$S = Ó(tf*idf)$$

where:

tf: Number of appearances of a retrieval term in a document idf: log (number of documents in which a retrieval term appears/total number of documents).

The expression for calculating document score S is a typical example and is not mandatory.

Based on the result, the retrieval result sorting means 26 sorts document numbers in ascending order by document score. The retrieval result outputting means 27 returns the 20 top-ranked document numbers and document scores to the integrating retrieval server 1.

The above described series of operations of the retrieval server 2a are performed in parallel in the retrieval server 2b as well; also from the retrieval server 2b, the retrieval result outputting means 27 returns the 20 top-ranked document numbers and document scores to the integrating retrieval server 1.

The integrating retrieval server 1 sorts a total of 40 document numbers returned from the retrieval servers 2a and 2b in ascending order by document score by the retrieval result sorting means 14. Next, the retrieval result outputting means 15 returns a retrieval result of the 20 top-ranked document scores and the version name 0002 of the integrated database C having been used for the retrieval to the client.

To obtain a retrieval result of the 21 or greater top-ranked document scores under the same retrieval condition or the substance of documents selected from a retrieval result, a retrieval request (or a substance acquisition request) specifying the integrated version 0002 is sent from the client to the integrating retrieval server 1. Thereby, the retrieval servers 2a and 2b perform retrieval (or substance acquisition) fixedly to the respective versions 0316 and 0628 of the corresponding databases A 23a and B 23b, respectively, whereby consistent results can be obtained.

In the present embodiment, operation to delete integrated versions according to unload information can be incorporated.

Namely, the retrieval servers 2a and 2b retrieval conditions received from the integrating retrieval server 1 in the retrieval condition inputting means 21, and perform retrieval operation 52 for the database A (for the retrieval server 2a) and the database B (for the retrieval server 2b) by the retrieving means 22. At this time, the retrieval server 2a refers to the version management table 29 by the version referencing means 30 during the retrieval operation 52 and recognizes that the version name of the latest version of the database A 23a is not 0315 but 0316 and the total number of documents is 30,100 (FIG. 7). It also recognizes that the version 0315 has already been unloaded (FIG. 7). In such a case, the retrieving means 22 performs retrieval for the latest version 0316 of the database A 23a and obtains document numbers hitting the retrieval conditions and the frequency of each retrieval term in documents, and stores them in an area for intermediate results 24.

The statistical information outputting means 28 returns statistical information containing the numbers of documents in which individual retrieval terms appear, to the integrating retrieval server 1, along with information of the latest version (version name 0316, the total number of documents 30100) having been used for the retrieval and information indicating that the version 0315 has already been unusable (unloaded). Thereafter, the retrieval server 2a waits until global statistical information obtained in the integrating retrieval server 1 arrives.

The retrieval server 2b performs the same operation as described above in the present embodiment.

Upon receiving the statistical information from the retrieval servers 2a and 2b, the integrating retrieval server 1 performs statistical information compilation 53. In this operation, the statistical information compiling means 13 adds (compiles) the numbers of documents in which individual retrieval terms appear, returned from the retrieval servers 2a and 2b, to calculate the numbers of documents in the integrated database C in which the individual retrieval terms appear. The integrating retrieval server 1 performs integrated version management table updating 54, based on the above described compilation result. In the integrated version management table updating 54, the integrated version updating means 16 deletes the integrated version 0001 containing the obsolete version 0315 of the database A 23a from the integrated version management table 17, and registers an integrated version 0002 of the integrated database C in the integrated version management table 17. By the registration processing, the following information is stored in the integrated version management table 17: aversion name 0316 of the database A 23a and a version name 0628 of the database B 23b, which constitute the integrated version 0002 of the integrated database C, and the total number of documents in each of the databases.

Thereafter, the integrating retrieval server 1 sends the total number of documents of the integrated version 0002 of the integrated database C and the numbers of documents in which individual retrieval terms appear, to the retrieval servers 2a and 2b.

(A variant of document retrieval operation)

To perform document retrieval operation, normally, a retrieval server (e.g., 2a) refers to the version management table 29 by the version referencing means 30 to obtain information of the latest version of the database A 23a. In the early stage (time T1 in FIG. 7) of the time series operation, the version name of the latest version is 0315 and the total number of documents is 30,000. In this case, the retrieving means 22 performs retrieval for the database A 23a of the version and obtains document numbers hitting retrieval conditions and the frequency of each retrieval term in documents, and stores them in an area for intermediate results 24. The statistical information outputting means 28 returns the numbers of documents in which individual retrieval terms appear, as statistical information used for document score calculation, to the integrating retrieval server 1 along with information of the latest version having been used for the retrieval (version name 0315, the total number of documents 30,000). Thereafter, the retrieval server 2a waits for the arrival of global statistical information obtained in the integrating retrieval server 1 within a limited time. If the limited time elapses, processing for the retrieval request is canceled to proceed to processing for a different retrieval request.

(Holding plural intermediate results)

The retrieval server 2a refers to the version management table 29 by the version referencing means 30 to obtain information of the latest version of the database A. In the early stage (time T1 in FIG. 7) of the time series operation, the version name of the latest version is 0315 and the total number of documents is 30,000. In this case, the retrieving means 22 performs retrieval for the database A 23a of the version and obtains document numbers hitting retrieval conditions and the frequency of each retrieval term in documents, and stores them in an area for intermediate results 24. At this time, a unique ID is assigned to the intermediate result 24. The statistical information outputting means 28 returns the numbers of documents in which individual retrieval terms appear, as statistical information used for document score calculation, to the integrating retrieval server 1 along with information of the latest version having been used for the retrieval (version name 0315, the total number of documents 30,000). At this time, the IDs assigned to the intermediate results is also returned together. Thereafter, the retrieval server 2a waits for the arrival of global statistical information obtained in the integrating retrieval server 1, if the number of intermediate results exceeds a predetermined value. If the number of intermediate results does not exceed the predetermined value, the retrieval server 2a proceeds to processing for a different retrieval request without waiting for arrival of global statistical information obtained in the integrating retrieval server 1.

Upon receiving the statistical information from the retrieval servers 2a and 2b, the integrating retrieval server 1 performs statistical information compilation. In this operation, the statistical information compiling means 13 adds (compiles) the numbers of documents in which individual retrieval terms appear, returned from the retrieval servers 2a and 2b, to calculate the numbers of documents in the integrated database C in which the individual retrieval terms appear. The integrating retrieval server 1 performs integrated version management table updating, based on the above described compilation result. In the integrated version management table updating, the integrated version updating means 16 registers the integrated version 0001 of the integrated database C in the integrated version management table 17.

By the registration processing, the following information is stored in the integrated version management table 17 : a version name 0315 of the database A 23a and a version name 0628 of the database B 23b, which constitute the integrated version 0001 of the integrated database C, and the total number of documents in each of the databases. The integrating retrieval server 1 sends the total number of documents of the integrated version 0001 of the integrated database C and the numbers of documents in which individual retrieval terms appear, to the retrieval servers 2a and 2b. IDs sent from the retrieval servers 2a and 2b together with the number of appearing documents are also sent back together.

Upon receiving the total number of documents of the integrated version 0001 of the integrated database C and the numbers of documents in which individual retrieval terms appear, the retrieval server 2a performs document score calculation (same as the operation 45 of the first embodiment) . In the document score calculation, using the global statistical information sent from the integrating retrieval server 1, that is, the total number of documents of the integrated version 0001 of the integrated database C and the numbers of documents in which individual retrieval terms appear, the score calculating means 25 calculates document score S for each of documents of the intermediate results stored in the area for the intermediate results 24 and having a pertinent ID by the following expression:

$$S = Ó(tf*idf)$$

where:

tf: Number of appearances of a retrieval term in a document idf: log (number of documents in which a retrieval term appears/total number of documents).

Based on the result, the retrieval result sorting means 26 sorts document numbers in ascending order by document score. The retrieval result outputting means 27 returns the M top-ranked document numbers and document scores to the integrating retrieval server 1.

The above described series of operations of the retrieval server 2a are performed in parallel in the retrieval server 2b as well; also from the retrieval server 2b, the retrieval result outputting means 27 returns the M top-ranked document numbers and document scores to the integrating retrieval server 1.

The integrating retrieval server 1 sorts a total of 2M document numbers returned from the retrieval servers 2a and 2b in ascending order by document score by the retrieval result sorting means 14. Next, the retrieval result outputting means 15 returns a retrieval result of the M top-ranked document scores and the version name 0001 of the integrated database C having been used for the retrieval to the client.

To obtain a retrieval result of the (M+1) or greater top-ranked document scores under the same retrieval condition or the substance of documents selected from a retrieval result, a retrieval request (or a substance acquisition request) specifying the integrated version 0001 is sent from the client to the integrating retrieval server 1. Thereby, the retrieval servers 2a and 2b perform retrieval (or substance acquisition) fixedly to the respective versions 0315 and 0628 of the corresponding databases A 23a and B 23b, respectively, whereby consistent results can be obtained.

(Processing flow)

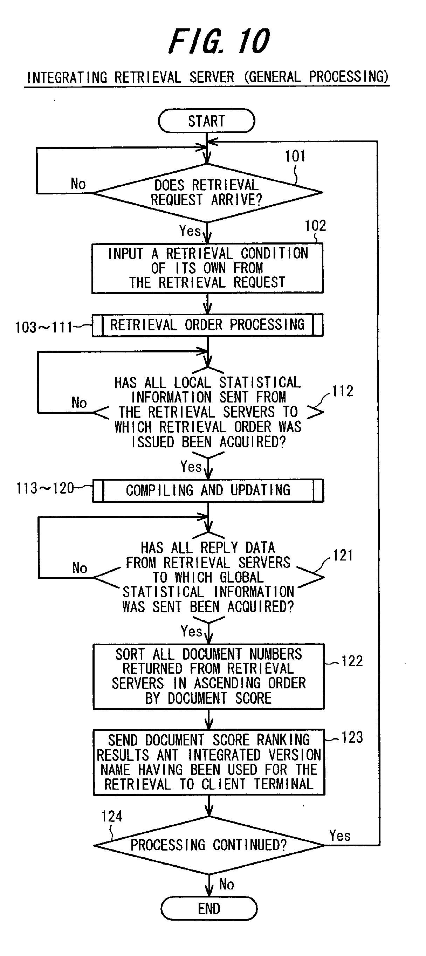

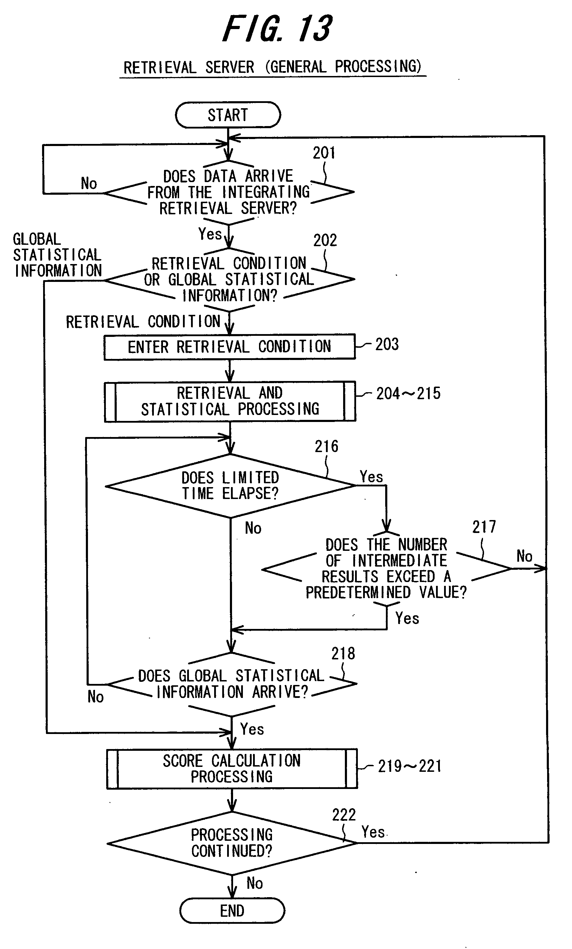

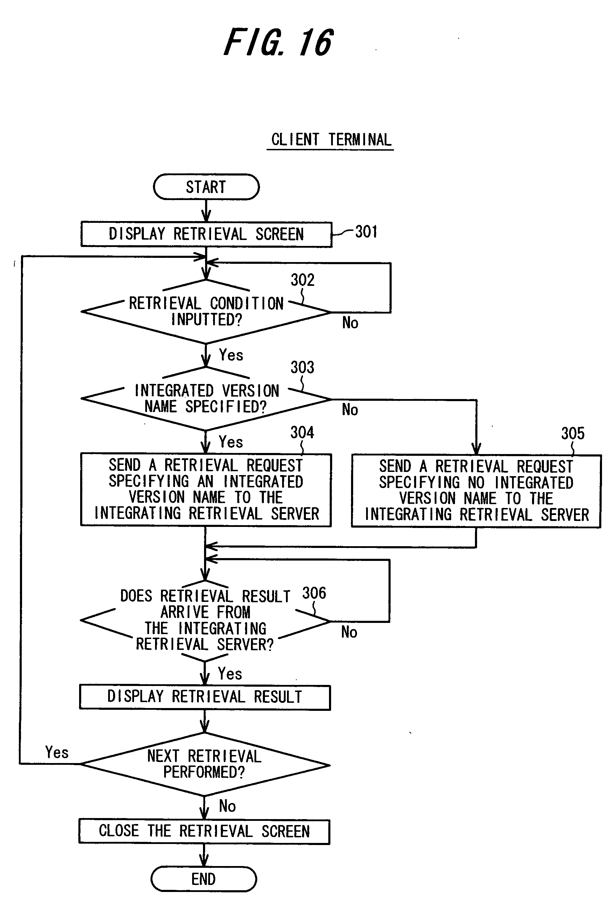

FIGS. 10 to 16 are flowcharts for comprehensively explaining an operation procedure of distributed document retrieval processing in the above described embodiments of the present invention wherein the flowcharts are provided for each of the client terminal (hereinafter, the client in the above described embodiments will be described separately for a client terminal and a user using it), the integrating retrieval server, and retrieval servers. Namely, FIGS. 10 to 12 show flows of processing performed by the integrating retrieval server, FIGS. 13 to 15 show flows of processing performed by the retrieval servers, and FIG. 16 shows a flow of processing performed by a client terminal. Hereinafter, referring to these drawings, the respective operation procedures of the integrating retrieval server, retrieval servers, and client terminal will be described in that order.

(Processing of the integrating retrieval server)

As shown in a flowchart of FIG. 10, upon confirming the arrival of a retrieval request from the client terminal (step 101), the integrating retrieval server inputs a retrieval condition of its own from the retrieval request by the retrieval condition inputting means (step 102). Upon input of the retrieval condition, retrieval order processing for the retrieval servers is started.

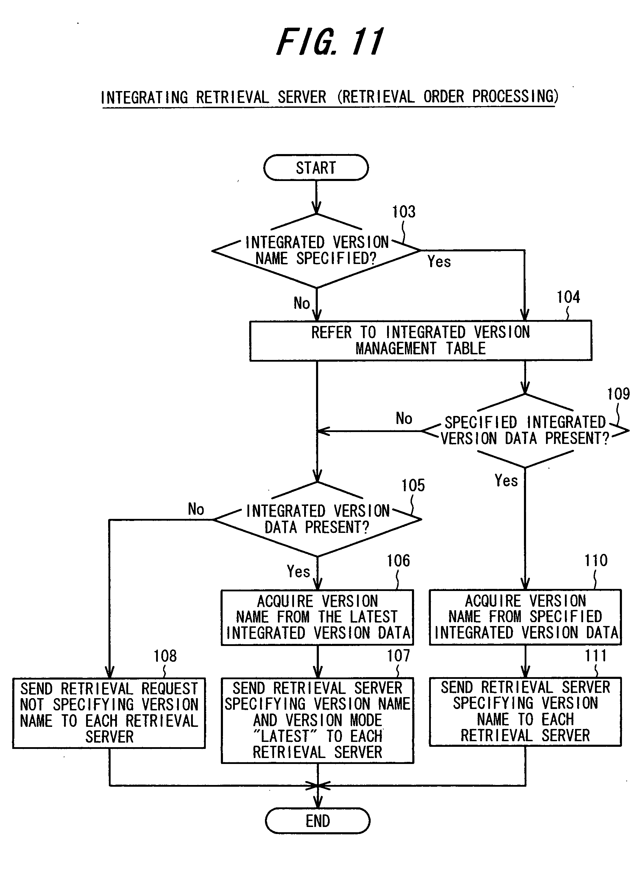

Namely, as shown in a retrieval order processing flowchart of FIG. 11, it is checked whether an integrated version name is specified in the retrieval condition inputted by the retrieval condition inputting means (step 103).

If no integrated version name is specified (step 103, NO) , the integrated version referencing means refers to the integrated version management table (step 104) to check for existence of integrated version data (step 105). If the integrated version data exists (step 105, YES), the retrieval condition sending means acquires a version name from the latest integrated version data (step 106), and sends retrieval requests specifying the version name and "latest" as a version mode to the retrieval servers (step 107). On the other hand, if no integrated version data exists (step 105, No), the retrieval condition sending means sends retrieval requests specifying no retrieval condition sending means version name to the retrieval servers (step 108).

If an integrated version name is specified (step 103, YES) , the integrated version referencing means refers to the integrated version management table (step 104) to check for existence of specified integrated version data (step 109). If the specified integrated version data exists (step 109, YES), the retrieval condition sending means acquires a version name from the specified integrated version data (step 110), and sends retrieval requests specifying the version name to the retrieval servers (step 111). On the other hand, if the specified integrated version data does not exist (step 109, No) , the same processing as when no integrated version name is specified as described above is performed (steps 105 to 108).

Upon termination of the above described retrieval processing, as shown by a flowchart of FIG. 10, the integrating retrieval server waits until all local statistical information sent from the retrieval servers to which the retrieval order was issued, is acquired (step 112, No).

Upon confirming that all local statistical information sent from the retrieval servers to which the retrieval order was issued has been acquired (step 112, Yes), the integrating retrieval server proceeds to compilation and update processing by the statistical information compiling means and statistical information updating means.

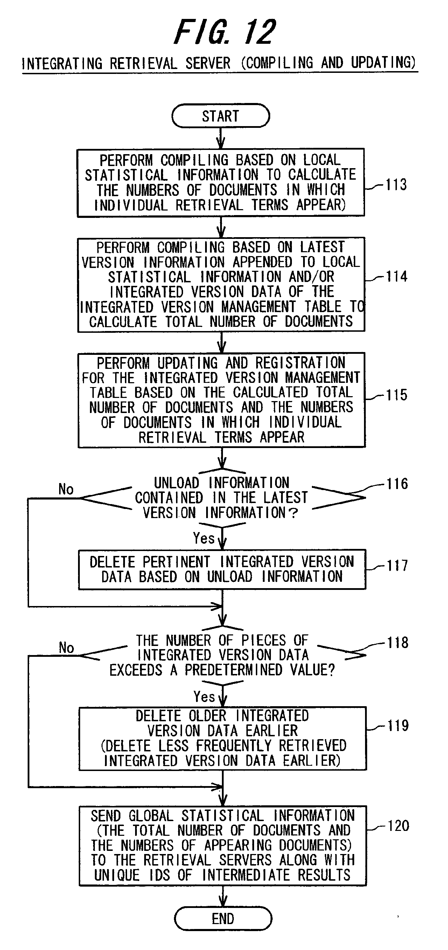

Namely, as shown in a compilation and update processing flowchart of FIG. 12, the statistical information compiling means performs compilation processing based on local statistical information sent from the retrieval servers to calculate the numbers of documents in which individual retrieval terms appear (step 113).

The total numbers of documents are calculated based on the latest version information if the latest version information of relevant retrieval servers is attached to the local statistical information sent from the retrieval servers, or referring to the integrated version management table if the latest version information is not attached (step 114).

The integrated version updating means performs updating and registration for the integrated version management table, based on the calculated total numbers of documents and the numbers of documents in which individual retrieval terms appear (step 115).

During the updating and registration, if unload information is contained in the latest version information (step 116, Yes) , the integrated version updating means deletes relevant integrated version data, based on the unload information (step 117).

During the updating and registration, if the number of pieces of integrated version data exceeds a predetermined value (step 118, Yes), the integrated version updating means deletes older integrated version data earlier (or deletes less frequently retrieved integrated version data earlier) (step 119).

Processing in the steps 115 to 119 may be performed as required, not when the latest version information is sent from the retrieval servers.

The statistical information compiling means sends the total numbers of documents and the numbers of appearing documents thus calculated, that is, global statistical information, to the retrieval servers along with unique IDs of intermediate results (step 120).

Upon termination of the compilation and update processing, as shown by a flowchart of FIG. 10, the integrating retrieval server waits for the arrival of reply data (document numbers and document scores) from the retrieval servers to which the global statistical information was sent (step 121, NO).

Upon confirming that all reply data sent from the retrieval servers has been acquired (step 121, Yes), the retrieval result sorting means sorts all relevant document numbers in ascending order by document score (step 122).

The retrieval result outputting means sends the M (number specified in the retrieval request from the client terminal) top - ranked document numbers and an integrated version name having been used for the retrieval to the client terminal as a final retrieval result (step 123).

Upon termination of the above processing operation, the integrating retrieval server proceeds to the next retrieval processing (step 124, Yes) or terminates the processing (step 124, No).

(Processing of retrieval servers)

As shown by a flowchart of FIG. 13, upon confirming that retrieval order data from the integrating retrieval server arrives (step 201, Yes), the retrieval servers determine the type of the retrieval order data. Specifically, the retrieval servers determine whether the type of the retrieval order data is retrieval condition or global statistical information (step 202).

For global statistical information, basically, the retrieval servers proceeds to a score calculation procedure, which will be described later.

For retrieval condition, the retrieval condition inputting means inputs the retrieval condition (step 203), and proceeds to retrieval and statistical processing as described below.

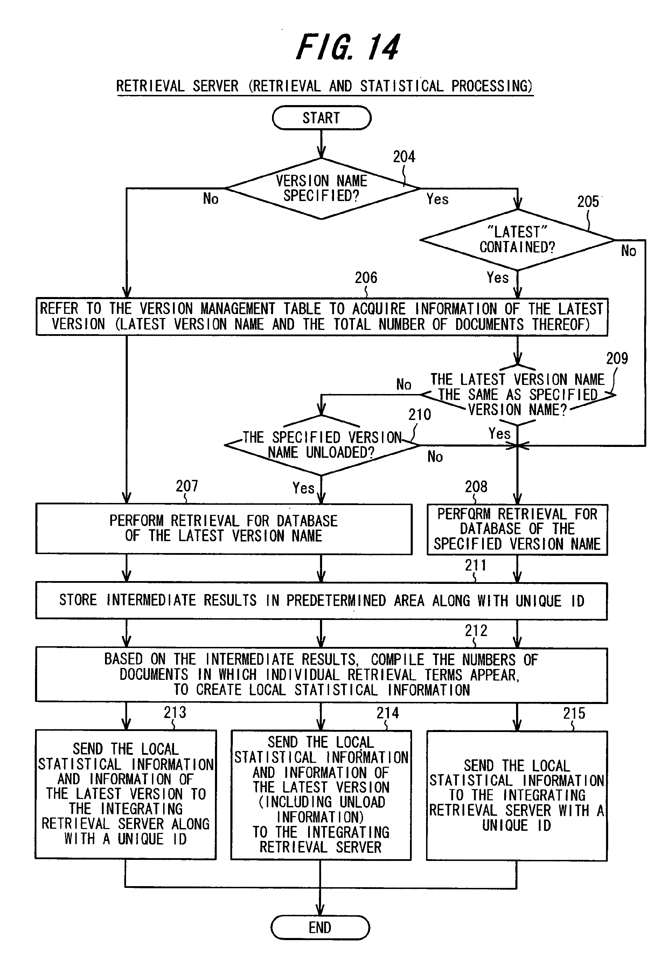

Namely, as shown by a retrieval and statistical processing flowchart of FIG. 14, the version referencing means checks whether a version name and a version mode "latest" are contained in the retrieval condition (steps 204 and 205).

If no version name is specified in the retrieval condition (step 204, No), the version referencing means refers to the version management table to acquire information of the latest version (latest version name and the total number of documents) (step 206), and then the retrieving means performs retrieval for the latest version name of a database (step 207).

If a version name is specified in the retrieval condition (step 204, Yes) and a version mode "latest" is not contained (step 205, No), since it means continued retrieval operation, the version referencing means does not refer to the version management table and the retrieving means performs retrieval for a database of a specified version name (step 208).

If a version name is specified in the retrieval condition (step 204, Yes) and a version mode "latest" is contained (step 205, Yes), the version referencing means refers to the version management table to acquire information of the latest version (step 206), and judges whether the latest version name and the version name specified in the retrieval condition are the same (step 209).

If the latest version name and the specified version name are the same (step 209, Yes), the retrieving means performs retrieval for a database of the specified version name (step 208).

If the latest version name and the specified version name are different (step 209, No), the version referencing means further checks whether the specified version name is unloaded (step 210), and if not unloaded (step 210, No) , the retrieving means performs retrieval for a database of the specified version name (step 207). On the other hand, if the specified version name is unloaded (step 210, Yes), the retrieving means performs retrieval for a database of the latest version name (step 208), or an error message is sent to the integrating retrieval server.

Upon termination of the above retrieval operation, commonly to all the above cases, the retrieving means stores intermediate results (document numbers and in-document appearance frequencies obtained by retrieval in the process of the retrieval) in an intermediate results data area along with a unique ID assigned to the intermediate results (step 211).

The statistical information outputting means compiles the numbers of documents in which individual retrieval terms appear, to create local statistical information (step 212), and proceeds to the next statistical information output processing.

Namely, the statistical information outputting means sends the created local statistical information to the integrating retrieval server along with a unique ID (step 213, 214, or 215). If a version name is not specified (step 204, No) or a version name is specified but the specified version is different from the latest version (step 204, Yes, and step 209, No) , the local statistical information added with the information of the latest version is sent (step 213). When the specified version name is different from the latest version name (step 204, No), if the specified version name has been unloaded (step 210, Yes), the information of the latest version is sent further added with unload information (step 214).

Upon termination of the above retrieval processing, as shown by a flowchart of FIG. 13, the retrieval servers automatically select whether they wait until global statistical information from the integrating retrieval server arrives, or they proceed to the next retrieval processing.

Namely, the retrieval servers determine whether a limit time has elapsed (step 216) , and if so (step 216, Yes) , determines whether the number of intermediate results exceeds a predetermined value (step 217). If the number of intermediate results does not exceed a predetermined value (step 217, No), the retrieval servers proceed to the next retrieval processing (steps 201 to 215) without waiting for the arrival of global statistical information.

On the other hand, if the limited time elapses (step 216, No) or if the limited time elapses but the number of intermediate results exceeds a predetermined value (step 216, Yes, and step 218, Yes), the retrieval servers wait for the arrival of global statistical information without proceeding to the next retrieval processing (steps 201 to 215) (step 218, No).

In any of the above cases, as soon as global statistical information from the integrating retrieval server arrives, after predetermined processing, control transfers to score calculation processing.

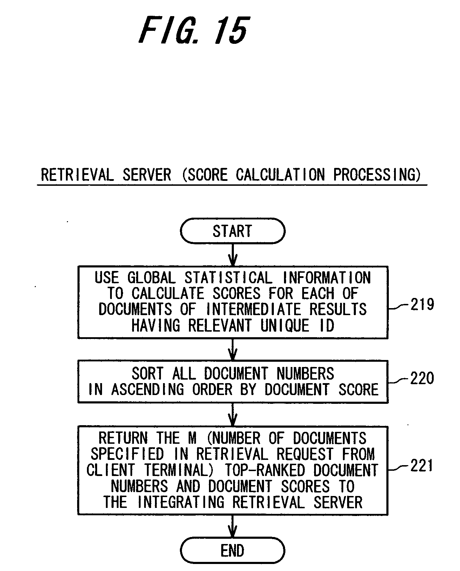

Namely, as shown by a score calculation processing chart of FIG. 15, the score calculating means of the retrieval servers uses global statistical information sent from the integrating retrieval server to calculate scores for each of documents of intermediate results having a relevant intermediate ID (step 219).

Next, the retrieval result sorting means sorts document numbers in ascending order by document score (step 220). This is not only method for sorting document scores.

The retrieval result outputting means returns the M (number of documents specified in the retrieval request from the client terminal) top-ranked document numbers and document scores to the integrating retrieval server 1.

Upon termination of the above score calculation processing, as shown by the flowchart of FIG. 13, the retrieval servers proceed to the next retrieval processing (step 222, Yes) or terminate the processing (step 222, No).

(Processing of client terminal)

The above described processing operation of the integrating retrieval server and retrieval servers enables the user to perform document retrieval more correctly and efficiently.

Namely, as shown by a flowchart of FIG. 16, the user to retrieve information displays a retrieval screen (step 301). Next, the user enters retrieval conditions such as a retrieval expression and integrated version name to the retrieval screen (step 302) to request document retrieval. When retrieval having consistency with previous retrieval is to be performed by specifying an integrated version name, the integrated version name is specified for the document retrieval (step 303, Yes). On the other hand, when document retrieval is to be performed for the latest database, the document retrieval is requested without specifying an integrated version name (step 303, No). For the former, the client terminal sends a retrieval request specifying an integrated version name to the integrating retrieval server (step 304); for the latter, the client terminal sends a retrieval request specifying no integrated version name to the integrating retrieval server (step 305).

After sending the retrieval conditions, the client terminal waits for the arrival of retrieval results from the integrating retrieval server (step 306, No).

Upon confirming the arrival of retrieval results from the integrating retrieval server (step 306, Yes) , the client terminal displays the retrieval results (step 307).

To perform the next retrieval (step 308, Yes), the above operation (steps 302 to 307) is repeated. If the next retrieval is not performed, the user closes the retrieval screen (step 309). This terminates all retrieval-related processing of the client terminal.

The present invention has been described based on the preferred embodiments shown by the accompanying drawings. It is apparent that the present invention can be easily changed and modified by those skilled in the art without departing from the spirit and scope of the present invention, and such modifications are intended to be included within the scope of the present invention.

**Claims**

1. A distributed document retrieval method for performing document retrieval by plural retrieval servers that each perform document retrieval for a database storing plural documents, and an integrating retrieval server that is connected to the plural retrieval servers over communication and issues retrieval orders to the retrieval servers, wherein:

each retrieval server delivers statistical information created based on intermediate results obtained by retrieval operation to the integrating retrieval server;
the integrating retrieval server compiles the statistical information to create global statistical information and delivers it to each retrieval server; and
each retrieval server calculates scores based on the global statistical information and sends retrieval results matching retrieval conditions back to the integrating retrieval server.

2. The distributed document retrieval method according to claim 1, wherein the retrieval servers hold the intermediate results obtained by the retrieval operation by themselves.

3. The distributed document retrieval method according to claim 2, wherein the retrieval servers wait for the arrival of global statistical information obtained in the integrating retrieval server within a limited time, and if said limited time elapses, processing for the retrieval request is canceled to proceed to processing for a different retrieval request.

4. The distributed document retrieval method according to claim 3, wherein the retrieval servers assign IDs to intermediate results obtained by the retrieval operation and hold the plural intermediate results by themselves, and deliver statistical information created based on the intermediate results to the integrating retrieval server along with the IDs assigned to the intermediate results.

5. The distributed document retrieval method according to claim 1, wherein:

the retrieval servers update the versions of the databases independently of each other, do not report the version updating to the integrating retrieval server each time the updating is performed, and deliver version information to the integrating retrieval server along with statistical information when retrieval operation on a subsequent retrieval request is performed; and
the integrating retrieval server automatically creates an integrated version consisting of a combination of the latest versions of the databases of the retrieval servers when said version information arrives or as required.

6. The distributed document retrieval method according to claim 5, wherein the retrieval servers, when the version of the databases is updated, unload an old version a predetermined time after a new version is loaded in the retrieval servers.

7. The distributed document retrieval method according to claim 5, wherein the integrating retrieval server, when the number of integrated versions exceeds a predetermined value, deletes the integrated versions according to a predetermined rule.

8. The distributed document retrieval method according to claim 5, wherein:

upon receipt of a retrieval request, the retrieval servers, if a version of the databases has been unloaded, delivers unload information indicating the fact to the integrating retrieval server along with statistical information; and
the integrating retrieval server, when said unload information arrives or as required, deletes pertinent integrated versions according to said unload information.

9. A distributed document retrieval device comprising plural retrieval servers that each perform document retrieval for a database storing plural documents, and an integrating retrieval server that is connected to the plural retrieval servers over communication and issues retrieval orders to the retrieval servers, wherein:

said retrieval servers each include: retrieving means for performing retrieval operation on the databases; means for holding intermediate results obtained as a result of said retrieval operation; statistical information outputting means for creating and outputting statistical information from said intermediate results; and score calculating means for giving scores to each of retrieved documents;
said integrating retrieval server includes statistical information compiling means for compiling statistical information delivered from plural retrieval servers; and
said integrating retrieval server creates global statistical information and delivers it to the retrieval servers, and the retrieval servers each calculate scores, based on said global statistical information, and send retrieval results matching retrieval conditions back to said integrating retrieval server.

10. The distributed document retrieval device according to claim 9, wherein said integrating retrieval server includes means for creating an integrated version, based on statistical information compiled by said statistical information compiling means.

11. The distributed document retrieval device according to claim 10, wherein said integrating retrieval server includes integrated version updating means for updating said integrated version, and integrated version management means for managing said integrated version.

12. The distributed document retrieval device according to claim 9, wherein said retrieval servers include retrieval result sorting means for sorting retrieval results according to a predetermined rule, based on the results of score calculating by said score calculating means.

13. The distributed document retrieval device according to claim 11, wherein:

said retrieval servers includes version updating means for updating the versions of the databases and version management means for managing versions wherein said version management means delivers version information to the integrating retrieval server along with statistical information when retrieval operation on a retrieval request is performed; and

said integrating retrieval server automatically creates an integrated version consisting of a combination of the latest versions of the databases of the retrieval servers when said version information arrives or as required.

14. The distributed document retrieval device according to claim 11, wherein said integrating retrieval server delivers integrated version information together when issuing a retrieval order to the retrieval servers.

15. A recording medium recording a distributed document retrieval program for performing document retrieval by plural retrieval servers that each perform document retrieval for a database storing plural documents, and an integrating retrieval server that is connected to the plural retrieval servers over communication and issues retrieval orders to the retrieval servers, the distributed document retrieval program comprising the steps of:

instructing each retrieval server to deliver statistical information created based on intermediate results obtained by retrieval operation to the integrating retrieval server;

instructing the integrating retrieval server to compile said statistical information to create global statistical information and deliver it to each retrieval server; and

instructing each retrieval server to calculate scores based on said global statistical information and send retrieval results matching retrieval conditions back to the integrating retrieval server.

16. A distributed document retrieval program for performing document retrieval by plural retrieval servers that each perform document retrieval for a database storing plural documents, and an integrating retrieval server that is connected to the plural retrieval servers over communication and issues retrieval orders to the retrieval servers, the distributed document retrieval program comprising the steps of:

instructing each retrieval server to deliver statistical information created based on intermediate results obtained by retrieval operation to the integrating retrieval server;

instructing the integrating retrieval server to compile said statistical information to create global statistical information and deliver it to each retrieval server; and

instructing each retrieval server to calculate scores based on said global statistical information and send retrieval results matching retrieval conditions back to the integrating retrieval server.

## FIG. 1

**FIG. 2**

CLIENT

INTEGRATING
RETRIEVAL SERVER 1
(INTEGRATED
DATABASE C)

RETRIEVAL SERVER 2a
(DATABASE A)

RETRIEVAL SERVER 2b
(DATABASE B)

RETRIEVAL REQUEST 41a

RETRIEVAL TARGET: INTEGRATED DATABASE C
RETRIEVAL EXPRESSION: PORTABLE OR TELEPHONE OR LIQUID CRYSTAL
NUMBER OF ACQUIRED DOCUMENTS: 20
INTEGRATED VERSION NAME: —

RETRIEVAL REQUEST 41b

RETRIEVAL TARGET: DATABASE A
RETRIEVAL EXPRESSION: PORTABLE OR TELEPHONE OR LIQUID CRYSTAL
NUMBER OF ACQUIRED DOCUMENTS: 20
INTEGRATED VERSION NAME: —

RETRIEVAL REQUEST 41c

RETRIEVAL TARGET: DATABASE B
RETRIEVAL EXPRESSION: PORTABLE OR TELEPHONE OR LIQUID CRYSTAL
NUMBER OF ACQUIRED DOCUMENTS: 20
INTEGRATED VERSION NAME: —

INTEGRATED DATABASE C — A — B
VERSION NAME:
TOTAL NUMBER OF DOCUMENTS:

INTEGRATED VERSION MANAGEMENT TABLE

LATEST VERSION INFORMATION
VERSION NAME: 0315
TOTAL NUMBER OF DOCUMENTS: 30000

RETRIEVAL ~42

LATEST VERSION INFORMATION
VERSION NAME: 0628
TOTAL NUMBER OF DOCUMENTS: 40000

RETRIEVAL ~42

43 ~ STATISTICAL INFORMATION COMPILING

| | 「PORTABLE」 | 「TELEPHONE」 | 「LIQUID CRYSTAL」 |
|---|---|---|---|
| NUMBER OF APPEARING DOCUMENTS | 125 | 893 | 650 |

LOCAL STATISTICAL INFORMATION

| | 「PORTABLE」 | 「TELEPHONE」 | 「LIQUID CRYSTAL」 |
|---|---|---|---|
| NUMBER OF APPEARING DOCUMENTS | 164 | 320 | 220 |

LOCAL STATISTICAL INFORMATION

44 ~ INTEGRATED VERSION MANAGEMENT TABLE UPDATING

GLOBAL STATISTICAL INFORMATION

| | 「PORTABLE」 | 「TELEPHONE」 | 「LIQUID CRYSTAL」 |
|---|---|---|---|
| NUMBER OF APPEARING DOCUMENTS | 289 | 1213 | 870 |
| TOTAL NUMBER OF DOCUMENTS | 70000 | | |

INTEGRATED VERSION MANAGEMENT TABLE

| | INTEGRATED DATABASE C | A | B |
|---|---|---|---|
| VERSION NAME: | 0001 | 0315 | 0628 |
| TOTAL NUMBER OF DOCUMENTS: | 70000 | 30000 | 40000 |

55 ~ DOCUMENT SCORE CALCULATION

55 ~ DOCUMENT SCORE CALCULATION

## FIG. 3

RETRIEVAL SERVER 2a

```
RETRIEVAL TARGET:DATABASE A
RETRIEVAL
EXPRESSION:PORTABLE OR
           TELEPHONE OR
           LIQUID CRYSTAL
NUMBER OF
ACQUIRED DOCUMENTS: 20
VERSION NAME:―
```

INTEGRATING RETRIEVAL SERVER 1

```
RETRIEVAL TARGET:INTEGRATED
               DATABASE C
RETRIEVAL
EXPRESSION:PORTABLE OR
           TELEPHONE OR
           LIQUID CRYSTAL
NUMBER OF
ACQUIRED DOCUMENTS: 20
INTEGRATED VERSION NAME:―
```

```
RETRIEVAL TARGET:DATABASE B
RETRIEVAL
EXPRESSION:PORTABLE OR
           TELEPHONE OR
           LIQUID CRYSTAL
NUMBER OF
ACQUIRED DOCUMENTS: 20
VERSION NAME:―
```

RETRIEVAL SERVER 2b

## FIG. 4

| DOCUMENT NUMBER | APPEARANCE FREQUENCY IN DOCUMENT | | |
|---|---|---|---|
| | 「PORTABLE」 | 「TELEPHONE」 | 「LIQUID CRYSTAL」 |
| 3 | 1 | 2 | 0 |
| 5 | 2 | 1 | 3 |
| 24 | 1 | 0 | 0 |
| 66 | 3 | 3 | 1 |
| . | . | . | . |
| . | . | . | . |
| . | . | . | . |
| 29230 | 0 | 1 | 1 |

# FIG. 5

|                                | 「PORTABLE」 | 「TELEPHONE」 | 「LIQUID CRYSTAL」 |
|--------------------------------|------------|-------------|-------------------|
| NUMBER OF APPEARING DOCUMENTS: | 125        | 893         | 650               |

# FIG. 6

| INTEGRATED VERSION NAME (TOTAL NUMBER OF DOCUMENTS) | DATABASE A VERSION NAME (TOTAL NUMBER OF DOCUMENTS) | DATABASE B VERSION NAME (TOTAL NUMBER OF DOCUMENTS) |
|-----------------------------------------------------|-----------------------------------------------------|-----------------------------------------------------|
| 0001 (70000)                                        | 0315 (30000)                                        | 0628 (40000)                                        |
| 0002 (70100)                                        | 0316 (30100)                                        | 0628 (40000)                                        |

# FIG. 7

DATABASE A
(RETRIEVAL
SERVER 2a)

VERSION 「0315」

VERSION 「0316」

VERSION 「0317」

DATABASE B
(RETRIEVAL
SERVER 2b)

VERSION 「0628」

VERSION 「0629」

VERSION 「0630」

TIME

T1                 T2

VERSION
MANAGEMENT TABLE
(RETRIEVAL
SERVER 2a)

| VERSION NAME | TOTAL NUMBER OF DOCUMENTS |
|---|---|
| 0315 | 30000 |

| VERSION NAME | TOTAL NUMBER OF DOCUMENTS |
|---|---|
| 0316 | 30100 |

VERSION 0315
HAS ALREADY
BEEN UNLOADED

VERSION
MANAGEMENT TABLE
(RETRIEVAL
SERVER 2b)

| VERSION NAME | TOTAL NUMBER OF DOCUMENTS |
|---|---|
| 0628 | 40000 |

| VERSION NAME | TOTAL NUMBER OF DOCUMENTS |
|---|---|
| 0628 | 40000 |

EP 1 248 208 A2

**FIG. 8**

INTEGRATING RETRIEVAL SERVER 1 (INTEGRATED DATABASE C)

CLIENT

RETRIEVAL SERVER 2a (DATABASE A)

RETRIEVAL SERVER 2b (DATABASE B)

RETRIEVAL REQUEST 51a
RETRIEVAL TARGET: INTEGRATED DATABASE C
RETRIEVAL EXPRESSION: TELEVISION OR DIGITAL
NUMBER OF ACQUIRED DOCUMENTS: 20
INTEGRATED VERSION NAME: —

RETRIEVAL REQUEST 51b
RETRIEVAL TARGET: DATABASE C
RETRIEVAL EXPRESSION: TELEVISION OR DIGITAL
NUMBER OF ACQUIRED DOCUMENTS: 20
VERSION NAME: 0315
VERSION MODE: LATEST

RETRIEVAL REQUEST 51c
RETRIEVAL TARGET: DATABASE B
RETRIEVAL EXPRESSION: TELEVISION OR DIGITAL
NUMBER OF ACQUIRED DOCUMENTS: 20
VERSION NAME: 0628
VERSION MODE: LATEST

INTEGRATED VERSION MANAGEMENT TABLE

| INTEGRATED DATABASE C | A | B |
|---|---|---|
| VERSION NAME: 0001 | 0315 | 0628 |
| TOTAL NUMBER OF DOCUMENTS: 70000 | 30000 | 40000 |

LATEST VERSION INFORMATION
VERSION NAME: 0316
TOTAL NUMBER OF DOCUMENTS: 30100
VERSION 0315 HAS ALREADY BEEN UNLOADED

RETRIEVAL 52

RETRIEVAL 52

53 STATISTICAL INFORMATION COMPILING

LOCAL STATISTICAL INFORMATION

| NUMBER OF APPEARING DOCUMENTS | 「TELEVISION」 60 | 「DIGITAL」 98 |
|---|---|---|

LOCAL STATISTICAL INFORMATION

| NUMBER OF APPEARING DOCUMENTS | 「TELEVISION」 75 | 「DIGITAL」 100 |
|---|---|---|

GLOBAL STATISTICAL INFORMATION

| | 「TELEVISION」 | 「DIGITAL」 |
|---|---|---|
| NUMBER OF APPEARING DOCUMENTS | 135 | 198 |
| TOTAL NUMBER OF DOCUMENTS: 70100 | | |

54 INTEGRATED VERSION MANAGEMENT TABLE UPDATING

INTEGRATED VERSION MANAGEMENT TABLE

| INTEGRATED DATABASE C | A | B |
|---|---|---|
| VERSION NAME: 0001 | 0315 | 0628 |
| TOTAL NUMBER OF DOCUMENTS: 70000 | 30000 | 40000 |
| VERSION NAME: 0001 | 0316 | 0628 |
| TOTAL NUMBER OF DOCUMENTS: 70100 | 30100 | 40000 |

55 DOCUMENT SCORE CALCULATING

55 DOCUMENT SCORE CALCULATING

# FIG. 9

RETRIEVAL SERVER 2a

```
RETRIEVAL TARGET:DATABASE A
RETRIEVAL
EXPRESSION:TELEVISION OR
              DIGITAL
NUMBER OF
ACQUIRED DOCUMENTS: 20
VERSION NAME:0315
VERSION MODE:LATEST
```

INTEGRATING RETRIEVAL SERVER 1

```
RETRIEVAL TARGET:INTEGRATED
              DATABASE C
RETRIEVAL
EXPRESSION:TELEVISION OR
              DIGITAL
NUMBER OF
ACQUIRED DOCUMENTS: 20
INTEGRATED VERSION NAME:─
```

```
RETRIEVAL TARGET:DATABASE B
RETRIEVAL
EXPRESSION:TELEVISION OR
              DIGITAL
NUMBER OF
ACQUIRED DOCUMENTS: 20
VERSION NAME:0628
VERSION MODE:LATEST
```

RETRIEVAL SERVER 2b

# FIG. 10

INTEGRATING RETRIEVAL SERVER (GENERAL PROCESSING)

```
                    ( START )
                        │
                        ▼
   No        ◇ DOES RETRIEVAL ◇ ── 101
  ◄─────────◇  REQUEST ARRIVE? ◇
            └────────┬────────┘
                Yes  ▼
        ┌─────────────────────────┐ ── 102
        │ INPUT A RETRIEVAL CONDITION │
        │     OF ITS OWN FROM      │
        │   THE RETRIEVAL REQUEST  │
        └────────────┬────────────┘
                     ▼
103~111 ─│║ RETRIEVAL ORDER PROCESSING ║│
                     │
                     ▼
            ◇ HAS ALL LOCAL STATISTICAL ◇
            ◇  INFORMATION SENT FROM    ◇ ── 112
   No       ◇ THE RETRIEVAL SERVERS TO  ◇
  ◄─────────◇ WHICH RETRIEVAL ORDER WAS ◇
            ◇  ISSUED BEEN ACQUIRED?    ◇
                Yes  ▼
113~120 ─│║ COMPILING AND UPDATING ║│
                     │
                     ▼
            ◇ HAS ALL REPLY DATA   ◇
            ◇ FROM RETRIEVAL SERVERS ◇ ── 121
   No       ◇   TO WHICH GLOBAL    ◇
  ◄─────────◇ STATISTICAL INFORMATION ◇
            ◇ WAS SENT BEEN ACQUIRED? ◇
                Yes  ▼
        ┌─────────────────────────┐
        │ SORT ALL DOCUMENT NUMBERS │ ── 122
        │   RETURNED FROM RETRIEVAL  │
        │ SERVERS IN ASCENDING ORDER │
        │      BY DOCUMENT SCORE     │
        └────────────┬────────────┘
                     ▼
        ┌─────────────────────────┐ ── 123
        │ SEND DOCUMENT SCORE RANKING │
        │ RESULTS ANT INTEGRATED VERSION │
        │  NAME HAVING BEEN USED FOR THE │
        │ RETRIEVAL TO CLIENT TERMINAL │
        └────────────┬────────────┘
                     ▼
 124                          Yes
  ◇ PROCESSING CONTINUED? ◇ ─────►
            └────┬────┘
              No ▼
            ( END )
```

# FIG. 11

INTEGRATING RETRIEVAL SERVER (RETRIEVAL ORDER PROCESSING)

EP 1 248 208 A2

## FIG. 12

INTEGRATING RETRIEVAL SERVER (COMPILING AND UPDATING)

```
                    ( START )
                        │
                        ▼
        ┌──────────────────────────────┐
        │ PERFORM COMPILING BASED ON LOCAL │
        │ STATISTICAL INFORMATION TO CALCULATE │──113
        │ THE NUMBERS OF DOCUMENTS IN WHICH │
        │ INDIVIDUAL RETRIEVAL TERMS APPEAR) │
        └──────────────────────────────┘
                        │
                        ▼
        ┌──────────────────────────────┐
        │ PERFORM COMPILING BASED ON LATEST │
        │ VERSION INFORMATION APPENDED TO LOCAL │
        │ STATISTICAL INFORMATION AND/OR │──114
        │ INTEGRATED VERSION DATA OF THE │
        │ INTEGRATED VERSION MANAGEMENT TABLE TO │
        │ CALCULATE TOTAL NUMBER OF DOCUMENTS │
        └──────────────────────────────┘
                        │
                        ▼
        ┌──────────────────────────────┐
        │ PERFORM UPDATING AND REGISTRATION │
        │ FOR THE INTEGRATED VERSION MANAGEMENT │
        │ TABLE BASED ON THE CALCULATED TOTAL │──115
        │ NUMBER OF DOCUMENTS AND THE NUMBERS │
        │ OF DOCUMENTS IN WHICH INDIVIDUAL │
        │ RETRIEVAL TERMS APPEAR │
        └──────────────────────────────┘
                        │
                        ▼
    No          UNLOAD INFORMATION          ──116
    ◄────────  CONTAINED IN THE LATEST
                VERSION INFORMATION ?
                        │ Yes
                        ▼
        ┌──────────────────────────────┐
        │ DELETE PERTINENT INTEGRATED VERSION │──117
        │ DATA BASED ON UNLOAD INFORMATION │
        └──────────────────────────────┘
                        │
                        ▼
    No       THE NUMBER OF PIECES OF      ──118
    ◄────────  INTEGRATED VERSION DATA
            EXCEEDS A PREDETERMINED VALUE?
                        │ Yes
                        ▼
        ┌──────────────────────────────┐
        │ DELETE OLDER INTEGRATED │
        │ VERSION DATA EARLIER │──119
        │ (DELETE LESS FREQUENTLY RETRIEVED │
        │ INTEGRATED VERSION DATA EARLIER) │
        └──────────────────────────────┘
                        │
                        ▼
        ┌──────────────────────────────┐
        │ SEND GLOBAL STATISTICAL INFORMATION │
        │ (THE TOTAL NUMBER OF DOCUMENTS AND │──120
        │ THE NUMBERS OF APPEARING DOCUMENTS) │
        │ TO THE RETRIEVAL SERVERS ALONG WITH │
        │ UNIQUE IDS OF INTERMEDIATE RESULTS │
        └──────────────────────────────┘
                        │
                        ▼
                    ( END )
```

# FIG. 13

RETRIEVAL SERVER (GENERAL PROCESSING)

```
                    ┌─────────────┐
                    │    START    │
                    └──────┬──────┘
                           │
         ┌─────────────────▼──────────────┐
    No   ╱   DOES DATA ARRIVE              ╲   201
   ◄─────   FROM THE INTEGRATING           ─┤
         ╲   RETRIEVAL SERVER?            ╱
          └──────────────┬───────────────┘
                    Yes  │
  GLOBAL                 ▼
  STATISTICAL  ┌──────────────────────┐  202
  INFORMATION  ╱  RETRIEVAL CONDITION  ╲─┤
   ◄──────────  OR GLOBAL STATISTICAL  ─┤
              ╲    INFORMATION?        ╱
               └──────────┬───────────┘
    RETRIEVAL CONDITION   │
              ┌───────────▼──────────────┐
              │ ENTER RETRIEVAL CONDITION │─── 203
              └───────────┬──────────────┘
              ┌───────────▼──────────────┐
              ║     RETRIEVAL AND        ║─── 204～215
              ║  STATISTICAL PROCESSING  ║
              └───────────┬──────────────┘
                          │            216
              ┌───────────▼──────────────┐      Yes
              ╱   DOES LIMITED           ╲─┤─────────┐
              ╲   TIME ELAPSE?           ╱           │
               └──────────┬─────────────┘            │
                       No │                          ▼
                          │         ┌──────────────────────┐  217
                          │         ╱  DOES THE NUMBER      ╲       No
                          │         ╲  OF INTERMEDIATE      ─┤────────►
                          │          │ RESULTS EXCEED A     ╱
                          │         ╲ PREDETERMINED VALUE? ╱
                          │          └─────────┬──────────┘
                          │                Yes │
                          ◄────────────────────┘
                          ▼                218
              ┌───────────────────────────┐
              ╱  DOES GLOBAL STATISTICAL   ╲─┤
              ╲   INFORMATION ARRIVE?      ╱
               └──────────┬────────────────┘
                No        │
                      Yes ▼
              ┌──────────────────────┐
              ║  SCORE CALCULATION   ║─── 219～221
              ║     PROCESSING       ║
              └───────────┬──────────┘
                          │         222
              ┌───────────▼──────────┐   Yes
              ╱     PROCESSING        ╲─┤─────►
              ╲     CONTINUED?        ╱
               └──────────┬──────────┘
                      No  │
                    ┌─────▼─────┐
                    │    END    │
                    └───────────┘
```

EP 1 248 208 A2

# FIG. 14

RETRIEVAL SERVER (RETRIEVAL AND STATISTICAL PROCESSING)

START

204 — VERSION NAME SPECIFIED?

No →

Yes → 205 — "LATEST" CONTAINED?

No

Yes

206 — REFER TO THE VERSION MANAGEMENT TABLE TO ACQUIRE INFORMATION OF THE LATEST VERSION (LATEST VERSION NAME AND THE TOTAL NUMBER OF DOCUMENTS THEREOF)

209 — THE LATEST VERSION NAME THE SAME AS SPECIFIED VERSION NAME?

No

210 — THE SPECIFIED VERSION NAME UNLOADED?

Yes

No

207 — PERFORM RETRIEVAL FOR DATABASE OF THE LATEST VERSION NAME

208 — PERFORM RETRIEVAL FOR DATABASE OF THE SPECIFIED VERSION NAME

211 — STORE INTERMEDIATE RESULTS IN PREDETERMINED AREA ALONG WITH UNIQUE ID

212 — BASED ON THE INTERMEDIATE RESULTS, COMPILE THE NUMBERS OF DOCUMENTS IN WHICH INDIVIDUAL RETRIEVAL TERMS APPEAR, TO CREATE LOCAL STATISTICAL INFORMATION

213 — SEND THE LOCAL STATISTICAL INFORMATION AND INFORMATION OF THE LATEST VERSION TO THE INTEGRATING RETRIEVAL SERVER ALONG WITH A UNIQUE ID

214 — SEND THE LOCAL STATISTICAL INFORMATION AND INFORMATION OF THE LATEST VERSION (INCLUDING UNLOAD INFORMATION) TO THE INTEGRATING RETRIEVAL SERVER

215 — SEND THE LOCAL STATISTICAL INFORMATION TO THE INTEGRATING RETRIEVAL SERVER WITH A UNIQUE ID

END

# FIG. 15

RETRIEVAL SERVER (SCORE CALCULATION PROCESSING)

START

USE GLOBAL STATISTICAL INFORMATION TO CALCULATE SCORES FOR EACH OF DOCUMENTS OF INTERMEDIATE RESULTS HAVING RELEVANT UNIQUE ID — 219

SORT ALL DOCUMENT NUMBERS IN ASCENDING ORDER BY DOCUMENT SCORE — 220

RETURN THE M (NUMBER OF DOCUMENTS SPECIFIED IN RETRIEVAL REQUEST FROM CLIENT TERMINAL) TOP-RANKED DOCUMENT NUMBERS AND DOCUMENT SCORES TO THE INTEGRATING RETRIEVAL SERVER — 221

END

# FIG. 16

CLIENT TERMINAL

```
                    ┌──────────┐
                    │  START   │
                    └──────────┘
                         │
                         ▼
        ┌──────────────────────────────┐
        │  DISPLAY RETRIEVAL SCREEN     │─── 301
        └──────────────────────────────┘
                         │
                         ▼
                    ╱──────────╲                302
                  ╱  RETRIEVAL   ╲
                 ╱  CONDITION      ╲──── No
                 ╲  INPUTTED?      ╱
                  ╲──────────────╱
                         │ Yes
                         ▼
                    ╱──────────╲                303
                  ╱  INTEGRATED  ╲
                 ╱  VERSION NAME   ╲──── No
                 ╲  SPECIFIED?     ╱
                  ╲──────────────╱
                  Yes    │          305
          304            │
   ┌─────────────────────┐    ┌─────────────────────┐
   │ SEND A RETRIEVAL    │    │ SEND A RETRIEVAL    │
   │ REQUEST SPECIFYING  │    │ REQUEST SPECIFYING  │
   │ AN INTEGRATED       │    │ NO INTEGRATED       │
   │ VERSION NAME TO THE │    │ VERSION NAME TO THE │
   │ INTEGRATING         │    │ INTEGRATING         │
   │ RETRIEVAL SERVER    │    │ RETRIEVAL SERVER    │
   └─────────────────────┘    └─────────────────────┘
                │
                ▼
           ╱──────────╲
         ╱  DOES        ╲    306
        ╱ RETRIEVAL RESULT╲
        ╲ ARRIVE FROM THE ╱──── No
        ╲ INTEGRATING    ╱
         ╲ RETRIEVAL    ╱
          ╲ SERVER?    ╱
           ╲─────────╱
                │ Yes
                ▼
   ┌─────────────────────────┐
   │ DISPLAY RETRIEVAL RESULT│
   └─────────────────────────┘
                │
                ▼
           ╱──────────╲
    Yes  ╱  NEXT        ╲
   ──────╲ RETRIEVAL    ╱
         ╲ PERFORMED?  ╱
          ╲──────────╱
                │ No
                ▼
   ┌─────────────────────────┐
   │ CLOSE THE RETRIEVAL     │
   │ SCREEN                  │
   └─────────────────────────┘
                │
                ▼
           ┌──────────┐
           │   END    │
           └──────────┘
```